# EUROPÄISCHE PATENTSCHRIFT

(11) **EP 1 181 814 B1**
(45) Veröffentlichungstag und Bekanntmachung des Hinweises auf die Patenterteilung: **23.07.2003**
(21) Anmeldenummer: 00943635.3
(22) Anmeldetag: 25.05.2000
(51) Int. Cl.: H04N 5/232, A61C 9/00

(54) **VERFAHREN ZUR ERFASSUNG UND DARSTELLUNG EINES ODER MEHRERER OBJEKTE, BEISPIELSWEISE ZÄHNE**
METHOD FOR DETECTING AND REPRESENTING ONE OR MORE OBJECTS, FOR EXAMPLE TEETH
PROCEDE DESTINE A LA SAISIE ET A LA REPRESENTATION D'UN OU PLUSIEURS OBJETS, PAR EXEMPLE DE DENTS

(30) Priorität: 27.05.1999 DE 19924291
(43) Veröffentlichungstag der Anmeldung: 27.02.2002
(73) Patentinhaber: Sirona Dental Systems GmbH, 64625 Bensheim (DE)
(72) Erfinder: PFEIFFER, Joachim, D-64625 Bensheim (DE); WEDLER, Volker, D-68542 Heddesheim (DE); ORTH, Ulrich, D-64686 Laufertal (DE); PIEPER, Reinhard, D-64625 Bensheim (DE)
(74) Vertreter: Sommer, Peter
(86) Internationale Anmeldenummer: DE0001668
(87) Internationale Veröffentlichungsnummer: WO00074374

(56) Entgegenhaltungen:
- EP-B- 0 250 993
- US-A- 5 604 817
- PATENT ABSTRACTS OF JAPAN vol. 017, no. 526 (P-1617), 21. September 1993 (1993-09-21) & JP 05 142682 A (ASAHI OPTICAL CO LTD), 11. Juni 1993 (1993-06-11)

## Beschreibung

Die Erfindung betrifft ein Verfahren und eine Vorrichtung zur Erfassung und Darstellung eines oder mehrerer Objekte, beispielsweise von Zähnen bzw. deren Präparationen und deren unmittelbarer Nachbarschaft, mittels einer Kamera für die Gewinnung von dreidimensionalen Daten. Diese Daten können zur Herstellung eines Passkörpers herangezogen werden.

Aus der EP 0 250 993 B1 ist ein Verfahren zur räumlichen Aufnahme und Darstellung von Zähnen bzw. deren Präparationen und deren unmittelbaren Nachbarschaft mittels einer Kamera für die Gewinnung von dreidimensionalen Daten zur Herstellung eines Passkörpers bekannt, bei welcher zur Gewinnung von Tiefendaten ein Referenzmuster aufprojiziert wird, wobei zur Bestimmung der geeigneten Aufnahmestellung der Kamera zunächst ein bewegtes Video-Suchbild erzeugt und auf einen Monitor angezeigt wird, auf dem das aufprojizierte Referenzmuster nicht in Erscheinung tritt. Befindet sich die Kamera in der gewünschten Aufnahmestellung, so wird auf einen Auslösebefehl hin eine Bildaufnahmesequenz zur Erzeugung und Speicherung eines Datensatzes, der einerseits Bildinformationen enthält, welche dem letzten Suchbild entsprechen und welcher in Form eines Kontrastbildes als Zeichenvorlage auf dem Monitor anzeigbar ist, und der andererseits zur Bildinformation deckungsgleiche Tiefenwerte enthält, so daß eine auf der Zeichenvorlage ausgeführte Konstruktion zusammen mit den Tiefenwerten den Passkörper dreidimensional definiert, ablaufen. Zur Konstruktion des Passkörpers werden vom Zahnarzt Grenzlinien eingegeben, wobei eine Zeichenhilfe verwendet wird. Als Zeichenhilfe kommt hier eine Maus in Betracht.

Die räumliche Aufnahme ist bei Verfahren zur Herstellung von Paßkörpern zur Zahnrekonstruktion in ein übergeordnetes, hier nicht näher erläutertes Verfahren eingebettet, das es erforderlich macht, verschiedene Aufnahmen, die aus unterschiedlichen Positionen der 3D-Kamera zum Objekt generiert wurden, zueinander in Beziehung zu setzen, d.h. die Transformationsparameter zu ermitteln, die alle Aufnahmen in ein gemeinsames Bezugssystem transformieren (Translation, Rotation). Diese Korrelation oder auch Registrierung der Aufnahmen zueinander wird prinzipiell dadurch erreicht, dass Software-Verfahren angewendet werden, die einen Bilddatensatz solange rotieren und translatieren, bis er in den Bereichen, in denen er das gleiche Objekt repräsentiert wie ein anderer Bilddatensatz, zudem er korreliert werden soll, mit diesem anderen Bilddatensatz optimal übereinstimmt. Software-Verfahren dieser Art funktionieren allerdings nur, wenn durch vorherige Maßnahmen die relative Lage der Bilder zueinander hinreichend bekannt ist, d.h. die Bilder müssen grob zueinander korreliert sein. Die Herstellung einer solchen Grob-Korrelation wird im Stand der Technik erreicht, indem in einem ersten Bild durch Benutzung einer Zeichenhilfe (Maus) markante Konturen des Objektes (z.B. Umfang) markiert werden. Bei Erstellung der zweiten 3D-Meßaufnahme werden diese Markierungen in das Video-Suchbild eingeblendet und die Messkamera wird in eine Position gebracht, so dass die Markierungen mit den entsprechenden Strukturen auf dem Videosuchbild bestmöglich übereinstimmen; in dieser Position wird dann die zweite Vermessung durchgeführt.

Diese interaktive Festlegung der Kontur-Linien macht es erforderlich, dass der Bediener bei der Abfolge mehrerer Aufnahmen ständig zwischen der Kamera und der Zeichenhilfe wechseln muß. Dies ist insbesondere dann von Nachteil, wenn verschiedene Aufnahmen desselben Zahns und seiner Umgebung miteinander korreliert werden müssen bzw. wenn Zahnreihen über mehrere Aufnahmen aufgenommen werden müssen.

Aus der US 5,604,817 ist ein Verfahren zur optischen, 3-dimensionalen Vermessung von Zähnen bekannt, bei dem ein Zahn aus zwei Raumpositionen aufgenommen wird und die 3D-Koordinaten-Daten der Zahnoberfläche relativ zur jeweiligen Aufnahmeposition für jede Aufnahme berechnet werden und die beiden Aufnahmen zu einem einzigen 3D-Zahnoberflächen-Datensatz vereinigt werden. Um die mathematische Korrelation zu ermöglichen, weisen die Aufnahmen aus den beiden Raumpositionen gemeinsame Aufnahmebereiche des Zahns auf. Eine Korrelation der aufzunehmenden Bereiche erfolgt allerdings erst nach der zweiten Aufnahme.

Dabei kann ein Video-Echtzeitbild aus der ersten Raumposition abgespeichert und beim Anfahren der zweiten Position eingeblendet werden, so dass sowohl das Video-Echtzeitbild als auch das abgespeicherte Videobild am Monitor sichtbar sind. Zum einen kann der Zahnarzt beim Anfahren einer neuen Aufnahmeposition durch Vergleich des Videoechtzeitbildes und der gespeicherten Aufnahme direkt erkennen, in wie weit sich die beiden Aufnahmebereiche überlappen. Zum anderen unterstützt dieses Videoverfahren den Zahnarzt bei der Auswahl der Punkte, die auf beiden Aufnahmen eindeutig erkennbar und zuordenbar sein müssen. Es ist allerdings davon auszugehen, dass das erste Videobild und das zweite Videobild mit ihrer unterschiedlichen räumlichen Ausrichtung neben einander, also in von einander unabhängigen Fenstern auf dem Bildschirm angezeigt werden.

Aus der JP 05 142 682 ist bekannt, von einander unabhängige Bilder zu einem Gesamtbild zusammenzusetzen.

Die Aufgabe besteht daher darin, ein Verfahren zur Erfassung und Darstellung eines oder mehrerer Objekte zu schaffen, bei dem verschiedene Einzelbilder desselben Objekts oder benachbarter Objekte zueinander in Beziehung gesetzt werden, ohne dabei mechanische Vorrichtungen, wie Zeichenhilfen, zu verwenden.

Diese Aufgabe wird durch das Verfahren gemäß Anspruch 1 gelöst. Gemäß der Erfindung wird nach dem Erzeugen der ersten Aufnahme in einem zweiten Schritt das Standbild in ein auf dem Monitor angezeigtes, aktuelles, bewegtes Suchbild zumindest in einem Teilbereich eingeblendet, so dass beide Bilder erkennbar sind, und in einem dritten Schritt wird die Kamera derart positioniert, dass das Suchbild mit dem eingeblendeten Standbild zumindest in einem Teilbereich zur Deckung kommt, wobei in einem vierten Schritt die zweite Aufnahme ausgelöst wird.

Das Verfahren ermöglicht im Zusammenspiel der die Kamera ausrichtenden Hand und der die Bilder verarbeitenden Software die manuelle Grob-Korrelation von zwei oder mehreren Bild-Datensätzen, die in Teilbereichen das gleiche Objekt repräsentieren.

Vorteilhafterweise liefert die Aufnahme einen 3D-Datensatz, d.h. der Bilddatensatz beinhaltet auch Tiefenwerte. Die grobkorrelierten 3D-Datensätze können nun durch automatische Rechenverfahren wie im Stand der Technik genau korreliert werden, d.h. die Transformationsparameter zwischen den Bezugssystemen der beiden Einzelaufnahmen rechnerisch automatisch ermittelt werden.

Die Anforderungen an die Grobkorrelation hängen dabei von der Gestaltung des rechnerischen Korrelationsverfahrens und der verfügbaren Rechenleistung und Zeit ab; generell gilt, dass je besser die Grobkorrelation ist, um so schneller und treffsicherer funktionieren die rechnerischen Methoden zu genauen Korrelation. Im Rahmen des übergeordneten Verfahrens zur Zahnersatzherstellung ergibt sich die Notwendigkeit, mehrere Aufnahmen zueinander zu korrelieren, und zwar in drei Varianten.

Um ein Objekt aus unterschiedlichen Richtungen oder Entfernungen zu vermessen, beispielsweise um auch Hinterschneidungen erfassen zu können und/oder den Tiefenmessbereich zu erweitern und/oder die Genauigkeit durch Mittelung zu erhöhen, wird die erste Aufnahme durchgeführt und durch Anwendung des erfindungsgemäßen Verfahrens erreicht, dass bei der zweiten und gegebenenfalls weiteren Aufnahme nur der Blickwinkel und der Abstand zum Objekt variiert wird, das Objekt aber stets in der annähernd gleichen Lage auf dem Bild erscheint. Dies ergibt eine vorteilhafte Ausgangsposition für die automatische, genau berechnete Korrelation.

Um ein Objekt im Urzustand zu vermessen und nachdem es in Teilbereichen verändert wurde, z.B. eine Zahnreihe vor bzw. nach der Präparation eines einzelnen Zahnes, wird die erste Vermessung des Objektes im Urzustand durchgeführt und durch Anwendung des erfindungsgemäßen Verfahrens erreicht, dass die zweite Aufnahme (des geänderten Objektes) aus möglichst gleicher Position der Kamera erfolgt wie die erste, eine grobe Korrelation somit erreicht ist. Die nachfolgende automatische genaue Korrelation erfolgt hier anhand der Objektbereiche, die nicht verändert wurden. Diese Vorgehensweise kann auch zur Verlaufsdokumentation benutzt werden.

Dadurch, dass das in dem zweiten Bild aufzunehmende Objekt gegenüber dem im ersten Bild aufgenommenen Objekt verändert worden ist, wobei die Umgebung des veränderten Objekts im wesentlichen unverändert geblieben ist, ist es möglich, Restaurationen zu dokumentieren und Änderungen an den Restaurationen zu erfassen.

Sollen Objekte vermessen werden, die ausgedehnter sind als das Messfeld der Kamera, kann ein Teil des Objektes in einer ersten Position der Kamera vermessen werden.

Danach wird eine zweite Messaufnahme erstellt, die einen Teil des Bereiches der ersten Messaufnahme abdeckt, aber auch einen neuen Teil des Objektes erfasst. Dabei wird das Standbild um eine vorgegebene Strecke und/oder einem vorgegebenen Winkel verschoben und somit nur in einem Teilbereich dem bewegten Suchbild überlagert. Anhand des Überlappungsbereiches werden die beiden Messaufnahmen nach dem erfindungsgemäßen Verfahren grobkorreliert und nach an sich bekannten automatischen Verfahren genau korreliert.

Dadurch ist es möglich, nacheinander aufgenommene Teilbilder eines kompletten Kiefers exakt aneinander zu reihen und so einen Zahnbogen als Ganzes zu erfassen und zu vermessen.

Dadurch, daß das erste Bild und das zweite Bild gegeneinander verschoben sind, wobei die Verschiebung wenigstens 1/10 und vorteilhafterweise 1/4 der Erstreckung des Bildes in Richtung der Verschiebung beträgt, ist es möglich, ein oder mehrere Objekte zu erfassen, die die Größe des eigentlichen Bildfeldes übertreffen. Die Korrelation erfolgt über die Feststellung gleicher Bereiche und die Transformation der gewonnenen dreidimensionalen Daten in ein einziges Vermessungsmodell.

Vorteilhafterweise erfolgt die Verschiebung und/oder Drehung in Abhängigkeit des aufzunehmenden Bereichs anhand von Kenntnissen über die vom aufzunehmenden Objekt zu erwartende Bildinformation für das zweite Bild. Diese Kenntnisse können aus statistischen Auswertungen ermittelte Informationen sein bzw. anhand individueller, für das Objekt typischer Besonderheiten ermittelt werden. Dadurch erübrigt sich ein manuelles Verschieben, wodurch die Bedienbarkeit verbessert wird.

Die erfindungswesentliche, oben beschriebene Einblendung des ersten Bildes kann vorteilhafterweise dadurch geschehen, dass das erste Bild dem Video-Suchbild bei der zweiten Aufnahme halbtransparent überlagert wird. Halbtransparent bedeutet hier, dass beide Bildinformationen so überlagert werden, dass sie beide überlagert auf dem Bildschirm erscheinen und vom Auge erkannt werden können.

Die Darstellung der Bildinformationen des ersten Bildes und des bewegten Video-Suchbildes kann auch durch additive Mischung entstehen.

Es ist ebenfalls möglich, dass das erste Bild und das bewegte Video-Suchbild so dargestellt sind, dass sich die Bildinformationen zeilen- oder spaltenweise abwechseln, oder dass die Bilder schachbrettartig verwoben werden, d.h. auf den "weißen Feldern" wird das erste Bild dargestellt, auf den "schwarzen Feldern" das bewegte Videosuchbild.

Vorteilhafterweise findet die Kombination von Bildinformationen nur in den Bereichen statt, wo beide Bilder Informationen liefern, wobei an den Stellen, wo nur ein Bild Informationen liefert, ausschließlich dieses dargestellt wird. Hierdurch werden nur die für die Beurteilung der Positionierung maßgeblichen Bereiche dargestellt, ohne dass störende Überlagerungen stattfinden.

Eine weitere Verbesserung der manuellen Ausrichtung des Video-Suchbilds auf das erste Bild wird dadurch erzeugt, dass das erste Bild in einem Farbton, insbesondere in Rot, dargestellt wird, wohingegen das Suchbild Schwarz-Weiß oder in einer anderen Farbe dargestellt ist.

Es kann von Vorteil sein, wenn das erste Bild nicht direkt überlagert wird, sondern mit bildverarbeiterischen Mitteln erzeugte Abwandlungen davon, da hier die Erkennungsgenauigkeit gegebenenfalls verbessert werden kann.

Ein weiterer Gegenstand der Erfindung ist eine Vorrichtung zur Durchführung des Verfahrens, wie sie in Anspruch 14 beschrieben ist.

Das erfindungsgemäße Verfahren wird anhand der Zeichnung erläutert. Es zeigen:
- Fig. 1: ein Flussdiagramm des verfahrensmäßigen Ablaufs zur Vermessung eines Zahnbogens einer ersten und einer zweiten Aufnahme,
- Fig. 2: die bereits erstellte erste Aufnahme eines Objekts,
- Fig. 3: die längsverschobene erste Aufnahme vor dem Einblenden des Video-Suchbilds,
- Fig. 4: das Video-Suchbild mit der überlappten ersten Aufnahme,
- Fig. 5: schematisch eine additive Mischung des Standbildes mit dem Suchbild,
- Fig. 6: schematisch die zeilenweise Verkämmung des Standbildes mit dem Suchbild und
- Fig. 7: die Verkämmung des Standbildes mit dem Suchbild punktweise wie in einem Schachbrett.

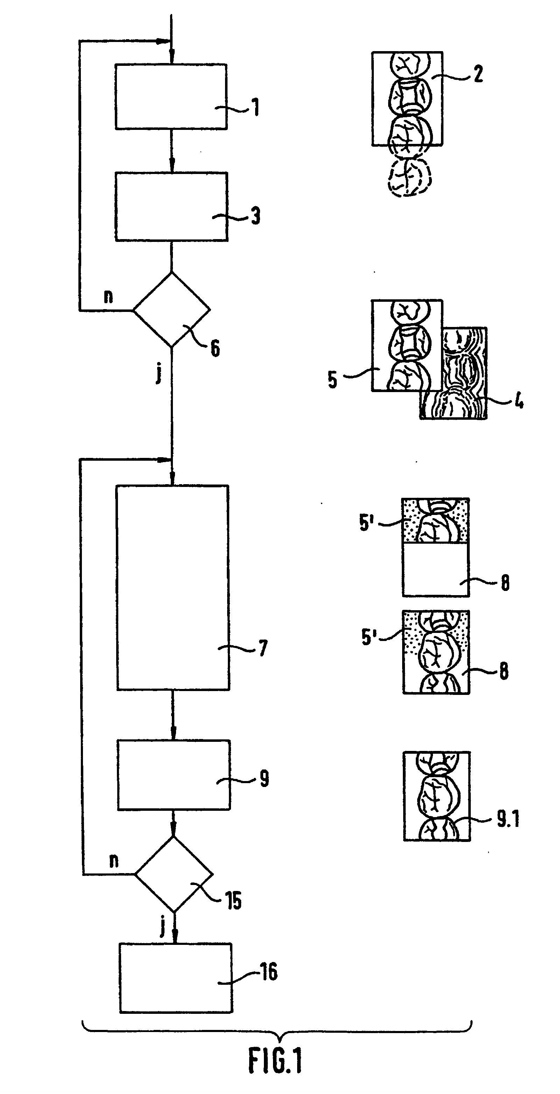

Die bereits in der EP 0 250 993 B1 beschriebene erste Aufnahme wird gemäß dem Flussdiagramm aus Fig. 1 zunächst durch eine dem eigentlichen Vermessungsvorgang vorangehende Suchphase eingeleitet. In dieser Suchphase 1 arbeitet eine Vermessungskamera zunächst im wesentlichen wie ein herkömmliches Videosystem. Die Zahnpartie, welche im Aufnahmefenster erscheint, wird durch Abbildungsoptik und Sensor registriert und auf einem Monitor als Standard-Fernsehbild 2 dargestellt. Der beobachtete Zahn wird durch die Kamera zum Zweck der räumlichen Vermessung beleuchtet und zwar mit einem gitterartigen Referenzmuster. Dieses Referenzmuster sollte jedoch nicht auch auf dem Suchbild erscheinen, da hierdurch der eigentliche Bildinhalt überlagert wird. Daher wird das Muster eliminiert. Die Kamera wird anhand des Video-Suchbilds so ausgerichtet, dass die für die Vermessung erforderlichen Messungen erfolgreich durchgeführt werden können. Handelt es sich um die Herstellung eines Passkörpers für eine Zahnrekonstruktion, so ist die Positionierung der Kamera in der Suchphase so zu wählen dass sie mit der späteren Einschubachse des Passkörpers übereinstimmt.

Im nächsten Schritt 3 erfolgt die Auslösung der Aufnahme nachdem die geeignete Position gefunden wurde. Während des Vermessungsvorgangs wird das Referenzmuster in verschiedenen räumlichen Lagen auf die Zahnoberfläche projiziert. Die dabei entstehenden Bilder werden in einem Speicher festgehalten. Dies dauert insgesamt weniger als 1/5 Sekunde. Danach wird die abgespeicherte Information transformiert und als Relief 4 in Form von Tiefendaten zu jedem Bildpunkt abgespeichert. Zusätzlich wird ein Kontrastbild 5 erzeugt, das unmittelbar zur Darstellung auf dem Monitor gelangen kann. Dieses Bild gleicht in seiner pseudo-plastischen Art dem Video-Suchbild und gestattet dadurch dem Zahnarzt eine sofortige Kontrolle 6 der Aufnahme.

Gemäß der Erfindung wird nun eine zweite Aufnahme 7 vorbereitet. Nach dem Erzeugen der ersten Aufnahme wird das Kontrastbild 5 als Standbild auf dem Monitor im Bereich des aktuellen Video-Suchbilds eingeblendet. Beim Ausrichten der Kamera werden auf dem Monitor im selben Fenster sowohl zumindest ein Teil 5' des ersten Kontrastbilds sowie das aktuelle Video-Suchbild 8 angezeigt. Anhand der in dem ersten Kontrastbild 5' dargestellten Strukturen ist es möglich, das aktuelle Video-Suchbild 8 so auszurichten, dass Teilbereiche des Bildes zur Deckung gebracht werden.

In dieser Position wird die zweite Aufnahme 9 ausgelöst und die Aufnahme wird in demselben Fenster 9.1 des Monitors ohne das erste Kontrastbild dargestellt.

Ist die Kontrolle 15 der Aufnahme zufriedenstellend, so wird in einem weiteren Schritt 16 eine rechnerische, automatische Korrelation der Tiefenwerte für die sich überdeckenden Bereiche vorgenommen, anhand welcher die Daten der ersten und der zweiten Aufnahme zueinander in Beziehung gesetzt werden. Das überlagerte korrelierte Relief ist im Speicher abgelegt.

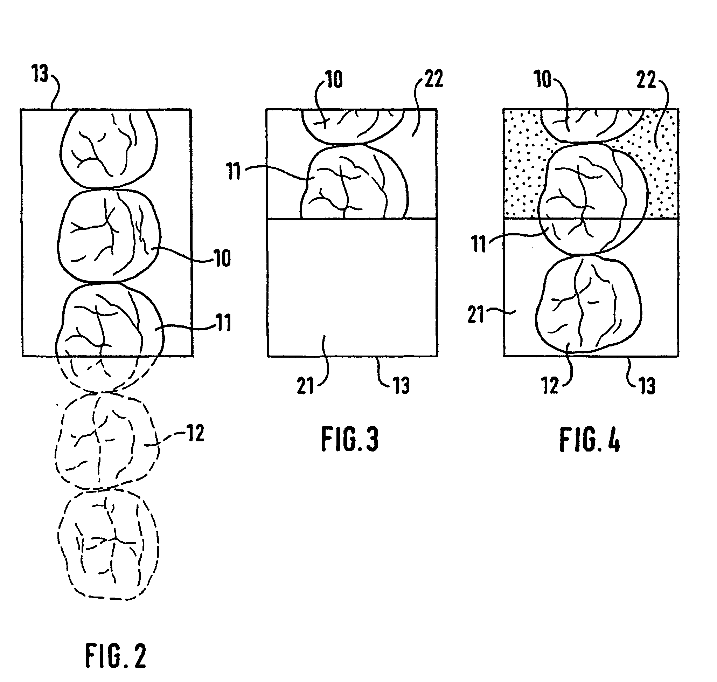

In Fig. 1 ist ein Verfahrensablauf dargestellt, bei dem die zweite Aufnahme gegenüber der ersten Aufnahme mit einem um etwa die Hälfte des ersten Bildes verschobenen Objekt durchgeführt wird. Dies wird in den Figuren 2 bis 4 näher erläutert.

In Fig. 2 sind als zu vermessende Objekte Zähne, 10, 11, 12, einer Zahnreihe dargestellt, wobei der Zahn 10 und etwa der halbe Zahn 11 mittels einer Kamera als Video-Suchbild innerhalb eines Fensters 13 auf einem nicht wiedergegebenen Monitor dargestellt sind. Der in dem Fenster 13 dargestellte Bereich wird mittels der Kamera in einer ersten Aufnahme vermessen, nachdem diese anhand des Video-Suchbilds entsprechend der Anforderungen für die Vermessung ausgerichtet wurde. Aus dem von der Kamera erzeugten Datensatz wird einerseits ein Kontrastbild hergestellt, andererseits werden Tiefendaten erzeugt. Das Kontrastbild entspricht in seinem Aussagegehalt in etwa dem Video-Suchbild, so dass der Bediener die Qualität der Aufnahme überprüfen kann. Dieses Kontrastbild wird nach der Aufnahme in dem Fenster 13 dargestellt.

Zur Vermessung des Zahns 11 wird nun die zweite Aufnahme dadurch vorbereitet, dass das Kontrastbild aus Fig. 2 innerhalb des Fensters 13 um etwa die halbe Bildlänge vom zu vermessenden Objekt 11 weg verschoben wird, wodurch sich ein Bereich 21 ergibt, in dem zunächst keine Bildinformationen vorhanden sind, dargestellt in Fig. 3.

Wird die Kamera auf den nun zu vermessenden Zahn 11 ausgerichtet, so wird in dem oberen Bereich 22 des Fensters 13 ein Teil des Kontrastbilds der ersten Aufnahme sowie das Video-Suchbild der vorzubereitenden zweiten Aufnahme angezeigt. Im Bereich 21 des Fensters 13 ist hingegen ausschließlich das aktuelle, bewegte Video-Suchbild dargestellt. Durch die Anzeige des ersten Kontrastbilds im Bereich 22 ist es möglich, das aktuelle Video-Suchbild so auszurichten, dass sich in dem Kontrastbild und in dem Suchbild dargestellte Teile des Zahns 10 und 11 überlappen und dabei so zur Deckung gebracht werden, dass das Aneinanderfügen der nachträglich erstellten zweiten Aufnahme möglich ist.

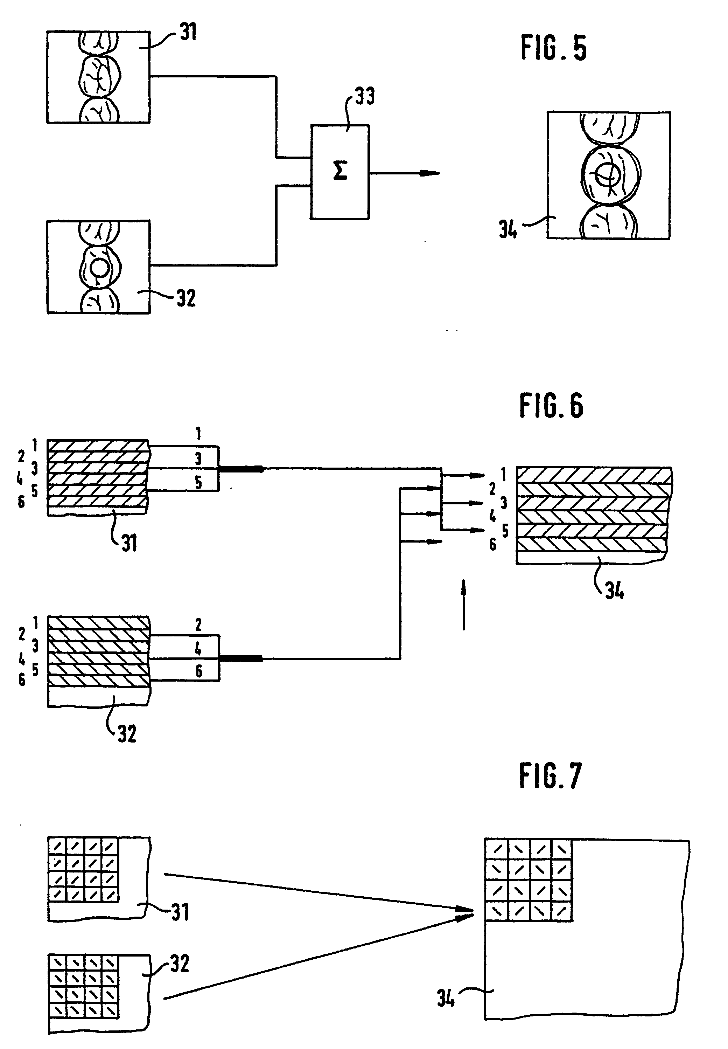

Um das bewegte Video-Suchbild zur Deckung mit dem ersten Kontrastbild bringen zu können, wird eine halbtransparente Darstellung des ersten Bildes bevorzugt, die auf unterschiedliche Weise realisiert werden kann, z.B. können die Bildinformationen beider Aufnahmen additiv gemischt werden. Dies ist in Fig. 5 dargestellt. Ausgehend von dem Standbild 31, welches in einem Speicher abgelegt ist, und dem von der Kamera aktuell aufgenommenen Suchbild 32 werden die Bildinformationen über einen Summierer 33 punktweise addiert und zur Anzeige als Bild 34 gebracht. Eine weitere Möglichkeit besteht darin, die Darstellung 34 der Bildinformationen zeilen- oder spaltenweise abzuwechseln, so dass die Zeile 1, 3, 5, 7, ... die Bildinformationen des Standbildes 31 darstellt, die Zeile 2, 4, 6, 8,. ... die Bildinformationen des Suchbildes 32. Die derartige Darstellung 34 wird als Verkämmen bezeichnet und findet nur dort statt, wo beide Bilder Information liefern, also im Bereich 22 des Fensters 13. (Fig. 3) Im Bereich 21, wo nur ein Bild, nämlich das aktuelle Video-Suchbild, Information liefert, wird diese exklusiv dargestellt.

Anstelle einer zeilenweise Verkämmung kann auch eine punktweise Verkämmung erfolgen, in dem gemäß Fig. 7 einzelne Punkte der Bilder 31, 32 jeweils abwechselnd in der Darstellung 34 enthalten sind, wodurch eine Art Schachbrettmuster entsteht.

Durch die Möglichkeit der Aneinanderreihung von mehreren Aufnahmen und die Übertragung der gemessenen Tiefendaten ist es möglich, über das von der Kamera zu vermessende Bildfeld hinaus wesentlich größere Bereiche zu vermessen und als unter den einzelnen Aufnahmen abgestimmtes Modell des Gesamtobjektes zu verwenden.

## Patentansprüche

1. Verfahren zur Erfassung und Darstellung eines oder mehrerer Objekte, beispielsweise von Zähnen bzw. deren Präparationen und deren unmittelbarer Nachbarschaft, mittels einer Kamera, bei dem in einem ersten Schritt eine erste Aufnahme durchgeführt wird, welche als Standbild auf einem Monitor darstellbar ist, **dadurch gekennzeichnet, dass** in einem zweiten Schritt ein aktuelles, bewegtes Suchbild auf dem Monitor angezeigt ist, in welches das Standbild zumindest in einem Teilbereich eingeblendet ist, so dass auf dem Monitor beide Bilder erkennbar sind, dass in einem dritten Schritt die Kamera derart positioniert wird, dass das Suchbild mit dem eingeblendeten Standbild zumindest in einem Teilbereich zur Deckung kommt und dass in einem vierten Schritt die zweite Aufnahme ausgelöst wird.

2. Verfahren nach Anspruch 1, **dadurch gekennzeichnet, dass** die Aufnahme einen dreidimensionalen Datensatz liefert, der Tiefenwerte enthält und dass die erste und die zweite Aufnahme anhand der Tiefenwerte des gemeinsamen Bereichs rechnerisch zueinander in Korrelation gesetzt werden.

3. Verfahren nach Anspruch 2, **dadurch gekennzeichnet, dass** die erste und die zweite Aufnahme im wesentlichen dasselbe Objekt betreffen, wobei die Aufnahmen aus unterschiedlichen Richtungen erfolgen.

4. Verfahren nach Anspruch 2, **dadurch gekennzeichnet, dass** das in der zweiten Aufnahme aufzunehmende Objekt verändert worden ist, wobei die Umgebung des veränderten Objekts im wesentlichen unverändert ist.

5. Verfahren nach Anspruch 2, **dadurch gekennzeichnet, dass** das Standbild um eine vorgegebene Strecke und/oder einen vorgegebenen Winkel verschoben wird und somit nur in einem Teilbereich dem bewegten Suchbild überlagert ist.

6. Verfahren nach Anspruch 5, **dadurch gekennzeichnet, dass** die erste und die zweite Aufnahme um wenigstens 1/10 der Erstreckung der Aufnahme in einer Richtung gegeneinander verschoben sind.

7. Verfahren nach Anspruch 6, **dadurch gekennzeichnet, daß** die Verschiebung und die Drehung in Abhängigkeit des aufzunehmenden Bereichs anhand von anatomischen Kenntnisse über die zu erwartende Bildinformation über die zweite Aufnahme erfolgt.

8. Verfahren nach einem der Ansprüche 1 bis 7, **dadurch gekennzeichnet, dass** die erste Aufnahme halbtransparent in das Suchbild eingeblendet ist.

9. Verfahren nach einem der Ansprüche 1 bis 8, **dadurch gekennzeichnet, dass** die halbtransparente Überlagerung des Standbildes und des bewegten Suchbildes durch additive Mischung entsteht.

10. Verfahren nach einem der Ansprüche 1 bis 8, **dadurch gekennzeichnet, dass** das Standbild und das bewegte Suchbild so dargestellt sind, dass sich die Bildinformationen zeilen- oder spaltenweise abwechseln oder punktweise wie in einem Schachbrett.

11. Verfahren nach einem der Ansprüche 8 bis 10, **dadurch gekennzeichnet, dass** die Überlagerung der Bildinformationen nur in den Bereichen stattfindet, wo beide Bilder Informationen liefern, wobei an den Stellen, wo nur ein Bild Information liefert, dieses ausschließlich dargestellt wird.

12. Verfahren nach einem der Ansprüche 8 bis 11, **dadurch gekennzeichnet, dass** in der Überlagerung das Standbild in einem Farbton, insbesondere Rot, dargestellt wird, wohingegen das Suchbild in einem anderen Farbton oder Schwarz-Weiß dargestellt wird.

13. Verfahren nach einem der Ansprüche 8 bis 12, **dadurch gekennzeichnet, dass** das Standbild nicht direkt überlagert wird, sondern mit bildverarbeiterischen Mitteln automatisch erzeugte Abwandlungen davon.

14. Vorrichtung zur Erfassung und Darstellung eines oder mehrerer Objekte, beispielsweise von Zähnen bzw. deren Präparationen und deren unmittelbarer Nachbarschaft, umfassend eine Kamera zur Erstellung einer Aufnahme und einen Monitor zur Darstellung der Aufnahme als Standbild, **dadurch gekennzeichnet, dass** auf dem Monitor ein aktuelles, bewegtes Suchbild anzeigbar ist, dass in das Suchbild das Standbild zumindest in einem Teilbereich so einblendbar ist, dass auf dem Monitor beide Bilder erkennbar sind, und dass das Suchbild mit dem eingeblendeten Standbild durch Positionieren der Kamera zumindest in einem Teilbereich zur Deckung bringbar ist und dass die zweite Aufnahme auslösbar ist.

## Claims

1. Method for detecting and representing one or more objects, for example teeth or their preparations and their immediate vicinity, using a camera, in which, in a first step, a first recording is carried out which can be represented as a still image on a monitor, **characterized in that**, in a second step, a current, moving search image is displayed on the monitor, into which the still image is inserted at least in a sub-area, so that both images are recognizable on the monitor, **in that**, in a third step, the camera is positioned in such a way that the search image attains congruence with the inserted still image at least in a sub-area, and **in that**, in a fourth step, the second recording is initiated.

2. Method according to Claim 1, **characterized in that** the recording yields a three-dimensional data record containing depth values, and **in that** the first and second recordings are correlated with one another computationally using the depth values of the common area.

3. Method according to Claim 2, **characterized in that** the first and second recordings essentially relate to the same object, the recordings being made from different directions.

4. Method according to Claim 2, **characterized in that** the object to be recorded in the second recording has been altered, the surroundings of the altered object essentially being unchanged.

5. Method according to Claim 2, **characterized in that** the still image is displaced by a predetermined distance and/or a predetermined angle and is thus superposed on the moving search image only in a sub-area.

6. Method according to Claim 5, **characterized in that** the first and second recordings are displaced by at least 1/10 of the extent of the recording in one direction relative to one another.

7. Method according to Claim 6, **characterized in that** the displacement and the rotation are effected in a manner dependent on the area to be recessed using an anatomical knowledge about the expected image information about the second recording.

8. Method according to one of Claims 1 to 7, **characterized in that** the first recording is inserted semi-transparently into the search image.

9. Method according to one of Claims 1 to 8, **characterized in that** the semi-transparent superposition of the still image and moving search image is produced by additive mixing.

10. Method according to one of Claims 1 to 8, **characterized in that** the still image and the moving search image are represented in such a way that the image information items alternate row by row or column by column or point by point like in a chess board.

11. Method according to one of Claims 8 to 10, **characterized in that** the superposition of the image information items takes place only in the areas where both images yield information items, and at the locations where only one image yields information, this image is exclusively represented.

12. Method according to one of Claims 8 to 11, **characterized in that**, in the superposition, the still image is represented in one hue, in particular red, whereas the search image is represented in another hue or in black and white.

13. Method according to one of Claims 8 to 12, **characterized in that** the still image is not superposed directly, but rather modifications thereof which are automatically generated by image-processing means.

14. Apparatus for detecting and representing one or more objects, for example teeth or their preparations and their immediate vicinity, comprising a camera for creating a recording and a monitor for representing the recording as a still image, **characterized in that** a current, moving search image can be displayed on the monitor, **in that** the still image can be inserted into the search image at least in a sub-area in such a way that both images are recognizable on the monitor, and **in that** the search image can be brought to congruence with the inserted still image by positioning of the camera at least in a sub-area, and **in that** the second recording can be initiated.

## Revendications

1. Procédé pour l'enregistrement et la représentation d'un ou de plusieurs objets par exemple de dents ou selon le cas de leurs préparations et de leur voisinage immédiat, dans lequel dans une première étape, on réalise à l'aide d'une caméra une première prise de vue qui peut être représentée sous la forme d'une image fixe sur un moniteur,
**caractérisé en ce que** dans une deuxième étape, on montre sur le moniteur, une image courante de recherche animée dans laquelle l'image fixe est incrustée dans une partie au moins de la zone, de manière à pouvoir reconnaître les deux images sur le moniteur, **en ce que** dans une troisième étape, on positionne la caméra de telle sorte que l'image de recherche est recouverte par l'image fixe incrustée sur au moins une partie de la zone, et **en ce que** dans une quatrième étape, on déclenche la deuxième prise de vue.

2. Procédé selon la revendication 1, **caractérisé en ce que** la prise de vue fournit un lot de données tridimensionnelles qui contient des valeurs de profondeur, et **en ce que** la première et la deuxième prise de vue sont mises mutuellement en corrélation par calcul à l'aide des valeurs de profondeur de la zone commune.

3. Procédé selon la revendication 2, **caractérisé en ce que** la première et la deuxième prise de vue concernent pour l'essentiel le même objet, les prises de vue étant réalisées à partir de différentes directions.

4. Procédé selon la revendication 2, caractërisé en ce que dans la deuxième prise de vue, l'objet à enregistrer a été modifié, l'environnement de l'objet modifié étant pour l'essentiel inchangé.

5. Procédé selon la revendication 2, **caractérisé en ce que** l'image fixe est décalée d'une distance définie et/ou d'un angle défini et n'est ainsi superposée que sur une partie à l'image de recherche animée.

6. Procédé selon la revendication 5, **caractérisé en ce que** la première et la deuxième prise de vue sont mutuellement décalées d'au moins 1/10 de l'extension de la prise de vue dans une direction.

7. Procédé selon la revendication 6, **caractérisé en ce que** le décalage et la rotation sont réalisés sur la deuxième prise de vue en fonction de la zone à enregistrer en s'appuyant sur les connaissances anatomiques concernant l'information d'image attendue.

8. Procédé selon une des revendications 1 à 7, **caractérisé en ce que** la première prise de vue est incrustée dans l'image de recherche de manière semi-transparente.

9. Procédé selon une des revendications 1 à 8, **caractérisé en ce que** la superposition semi-transparente de l'image fixe et de l'image de recherche animée résulte d'un mélange additif.

10. Procédé selon une des revendications 1 à 8, **caractérisé en ce que** l'image fixe et l'image de recherche animée sont représentées de manière à alterner les informations d'image sous forme de lignes ou de colonnes ou sous forme de points comme sur un échiquier.

11. Procédé selon une des revendications 8 à 10, **caractérisé en ce que** la superposition des informations d'image n'ait lieu que dans les zones où les deux images délivrent des informations, les endroits où une seule image délivre de l'information ne représentant que cette image exclusivement.

12. Procédé selon une des revendications 8 à 11, **caractérisé en ce que** dans la superposition, l'image fixe est représentée en une nuance de couleur en particulier le rouge, alors que l'image de recherche est par contre représentée en une autre nuance de couleur ou en noir et blanc.

13. Procédé selon une des revendications 8 à 12, **caractérisé en ce que** l'image fixe n'est pas directement superposée mais au contraire ses écarts générés automatiquement par des. moens de traitement d'image.

14. Dispositif pour l'enregistreme et la représentation d'un ou de plusieurs objets par exemple de dents ou selon le cas de leurs préparations et de leur voisinage immédiat comprenant une caméra pour réaliser une prise de vue et un moniteur pour la représentation de la prise de vue sous la forme d'une image fixe,
**caractérisé en ce qu'**on peut montrer sur le moniteur, une image courante de recherche animée, **en ce que** l'image fixe peut être incrustée dans une partie au moins de la zone, de manière à pouvoir reconnaître les deux images sur le moniteur, et **en ce qu'**on positionne la caméra de telle sorte que l'image de recherche peut être recouverte par l'image fixe incrustée sur au moins une partie de la zone, et **en ce qu'**on peut déclencher la deuxième prise de vue.
